# FASCICULE DE BREVET EUROPEEN

(11) **EP 4 560 097 B1**
(45) Date de publication et mention de la délivrance du brevet: **11.11.2026**
(21) Numéro de dépôt: 24213630.7
(22) Date de dépôt: 18.11.2024
(51) Int. Cl.: E05B 77/04, B60J 5/04, E05B 79/12

(54) **OUVRANT DE VÉHICULE COMPRENANT UN MOYEN DE BLOCAGE DE LA SERRURE EN CAS DE CHOC**
FAHRZEUGKLAPPE MIT EINER VORRICHTUNG ZUM BLOCKIEREN DES SCHLOSSES IM FALLE EINES AUFPRALLS
VEHICLE DOOR COMPRISING A MEANS FOR LOCKING THE LOCK IN THE EVENT OF A SHOCK

(30) Priorité: 21.11.2023 FR 2312812
(43) Date de publication de la demande: 28.05.2025
(73) Titulaire: Renault s.a.s, 92100 Boulogne Billancourt (FR)
(72) Inventeur: PRUVOST, Laurent, 78280 GUYANCOURT (FR)

(56) Documents cités:
- FR-A1- 3 117 143
- FR-A1- 3 128 162
- FR-A3- 3 070 052
- US-A1- 2021 238 895

## Description

L'invention concerne un ouvrant pour véhicule comprenant un moyen de blocage de la serrure en cas de choc. L'invention s'étend également à un moyen de blocage pour un tel ouvrant. L'invention porte encore sur un véhicule comprenant un tel ouvrant et/ou moyen de blocage.

Un véhicule automobile comprend classiquement au moins un ouvrant, notamment au moins une porte latérale, dotée d'une commande d'ouverture extérieure. La commande d'ouverture extérieure est généralement agencée sur un panneau extérieur de l'ouvrant et comprend un moyen d'actionnement, tel qu'une poignée, et commande une serrure. La serrure peut être agencée sur un panneau intérieur de la porte concernée et comprend un levier d'ouverture extérieure. Une action sur le moyen d'actionnement entraîne, par l'intermédiaire d'un système de transmission de mouvement à câble ou à tringle, un pivotement du levier d'ouverture extérieure de la serrure ayant pour effet de libérer la serrure et par conséquent d'ouvrir la porte.

Toutefois, lors d'un choc, différents phénomènes parasites peuvent être engendrés, tels que par exemple une déformation et/ou un déplacement du moyen d'actionnement, une déformation et/ou un déplacement du système de transmission, ainsi que l'inertie de certains éléments, et le levier de la serrure peut être entraîné en pivotement jusqu'à sa position libérant la serrure. Un tel pivotement résulte en une ouverture intempestive et inopportune de l'ouvrant dangereuse pour les utilisateurs et contraire aux exigences réglementaires. Il est ainsi souhaitable qu'une porte déformée par un choc demeure fermée afin d'assurer sa fonction de protection des occupants du véhicule.

Il est connu du FR 3 117 143 A1 d'intégrer à l'ouvrant un moyen de blocage du levier de la serrure, plus particulièrement du US 2021/238895 A1 du FR 3 128 162 A1 d'intégrer à un raidisseur de porte un moyen de blocage du levier de la serrure.

Aussi, il est connu d'intégrer à l'ouvrant un moyen de blocage du levier de la serrure prenant la forme raidisseur allongé fixé sur le panneau extérieur sur l'ensemble de sa longueur, de l'avant vers l'arrière de l'ouvrant. Un tel raidisseur est apte à entrer dans le volume de débattement du levier en cas de déformation de l'ouvrant afin de bloquer le levier d'ouverture de la serrure, par voie de conséquence la serrure. Un tel moyen de blocage présente néanmoins le désavantage de suivre la déformation du panneau extérieur. Il en résulte que, selon la zone d'impact du choc latéral, le moyen de blocage peut être déplacé par le choc de manière telle qu'il est rendu inefficace, particulièrement parce qu'il se déplace hors de la zone de débattement du levier. C'est notamment le cas lorsque l'impact a lieu à distance de la serrure, par exemple à l'avant ou dans une zone centrale de l'ouvrant.

La présente invention s'inscrit dans ce contexte et vise à fournir un ouvrant pour véhicule automobile comprenant un panneau extérieur et un panneau intérieur, formant un caisson, une commande d'ouverture extérieure, une serrure fixée au panneau intérieur et comprenant un levier configuré pour être déplacé entre une position de repos bloquant la serrure et une position de libération libérant la serrure de sorte à permettre l'ouverture de l'ouvrant. L'ouvrant comprend, en outre, un moyen de blocage du déplacement du levier, allongé, s'étendant le long d'une première direction et comprenant :
- une embase au moins en partie plane et un corps en partie relié à l'embase et s'étendant vers le panneau intérieur,
- une première portion et une deuxième portion comprenant respectivement une première extrémité et une deuxième extrémité du moyen de blocage opposées le long de la première direction, la deuxième portion étant disposée à proximité de la serrure et comprenant au moins une découpe interposée entre l'embase et au moins une partie du corps et s'étendant de la deuxième extrémité à une zone de pliure du moyen de blocage de sorte qu'au moins une partie du corps comprise dans la deuxième portion est flottante relativement à une partie de l'embase de la deuxième portion et est apte à s'étendre dans une trajectoire du levier comprise entre la position de repos et la position de libération avant que celui-ci n'atteigne la position de libération en cas de choc déformant le panneau extérieur réalisé le long d'au moins une deuxième direction transversale à la première direction.

Selon un exemple de réalisation, le corps du moyen de blocage comprend un profil en « U », ou sensiblement en « U », une première paroi et une deuxième paroi du moyen de blocage formant des bras du « U », reliés à l'embase, et une paroi intermédiaire formant une base du « U », reliant la première paroi et la deuxième paroi.

Notamment :
- l'ouvrant comprend, en outre, un renfort de serrure, fixé sur le panneau intérieur, la deuxième extrémité du moyen de blocage étant fixée sur le renfort de serrure ; ou
- la deuxième extrémité du moyen de blocage est fixée sur une partie intermédiaire du caisson comprise entre le panneau intérieur et le panneau extérieur.

Par exemple :
- l'ouvrant comprend, en outre, un renfort anti-intrusion, fixé sur le panneau extérieur et s'étendant le long d'une direction d'extension transversale à la première direction, la première extrémité du moyen de blocage étant fixée sur le renfort anti-intrusion ; ou
- la première extrémité du moyen de blocage est fixée sur une partie intermédiaire du caisson comprise entre le panneau intérieur et le panneau extérieur.

Optionnellement, l'ouvrant comprend une zone centrale centrée sur un milieu de l'ouvrant, défini le long d'au moins une direction, notamment la première direction, et s'étendant sur une distance, relativement au milieu de l'ouvrant, de ±25% de la longueur de l'ouvrant définie le long de ladite direction, la zone de pliure du moyen de réglage s'étendant en regard de la zone centrale.

Notamment, le moyen de blocage est réalisé dans un matériau plastique ou métallique.

Selon des exemples de réalisation :
- le moyen de blocage s'étend au moins en partie en vis à vis du levier le long de la deuxième direction ; ou
- le moyen de blocage comprend une patte d'extension, s'étendant au moins en partie en vis à vis du levier le long de la deuxième direction.

Notamment, les découpes sont droites et s'étendent parallèlement à la première direction et/ou parallèlement à au moins une partie de l'embase, lesdites découpes s'étendant sur au moins 30%, voire 50%, d'une longueur du moyen de blocage définie le long de la première direction.

Optionnellement, l'ouvrant comprend, en outre :
- du mastic disposé entre au moins une partie de l'embase et le panneau extérieur ; et/ou
- de la mousse amortissante, disposée au niveau d'au moins l'une des découpes.

L'invention concerne également un moyen de blocage pour un ouvrant selon l'invention présentant une forme allongée s'étendant le long d'une première direction et comprenant :
- une embase au moins en partie plane et un corps en partie relié à l'embase et s'étendant en saillie de l'embase ;
- une première portion et une deuxième portion comprenant respectivement une première extrémité et une deuxième extrémité du moyen de blocage opposées le long de la première direction, la deuxième portion comprenant au moins une découpe interposée entre l'embase et au moins une partie du corps et s'étendant de la deuxième extrémité à une zone de pliure du moyen de blocage de sorte qu'au moins une partie du corps compris dans la deuxième portion est flottante relativement à une partie de l'embase de la deuxième portion.

L'invention concerne enfin un véhicule, notamment un véhicule automobile, comprenant un ouvrant et/ou un moyen de blocage selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une vue schématique d'un véhicule selon un mode de réalisation.
La figure 2 est une vue schématique de côté d'un ouvrant latéral arrière gauche du véhicule, comprenant un moyen de blocage d'une serrure en cas de choc et dans lequel un panneau extérieur a été retiré.
La figure 3 est une vue schématique du moyen de blocage.
La figure 4 est une représentation schématique de l'ouvrant illustrant différentes positions d'un levier de la serrure.
La figure 5 est une représentation schématique d'un choc déplaçant le moyen de blocage.
La figure 6 est une vue en perspective d'un renfort de serrure coopérant avec le moyen de blocage.
La figure 7 est une vue de face du renfort de serrure coopérant avec le moyen de blocage.
La figure 8 est une vue de dessus de l'ouvrant en situation normale.
La figure 9 est une vue de dessus de l'ouvrant en situation d'impact touchant l'avant et la partie centrale de l'ouvrant.
La figure 10 est une représentation d'un exemple alternatif d'ouvrant dans lequel le moyen de blocage comprend une patte d'extension.
La figure 11 est une représentation schématique de l'ouvrant illustré à la figure 10 en situation normale.
La figure 12 est une représentation schématique de l'ouvrant illustré à la figure 10 en situation de choc déformant l'ouvrant.
La figure 13 est une représentation schématique de l'ouvrant comprenant une mousse amortissante ayant notamment pour effet de réduire le bruit.

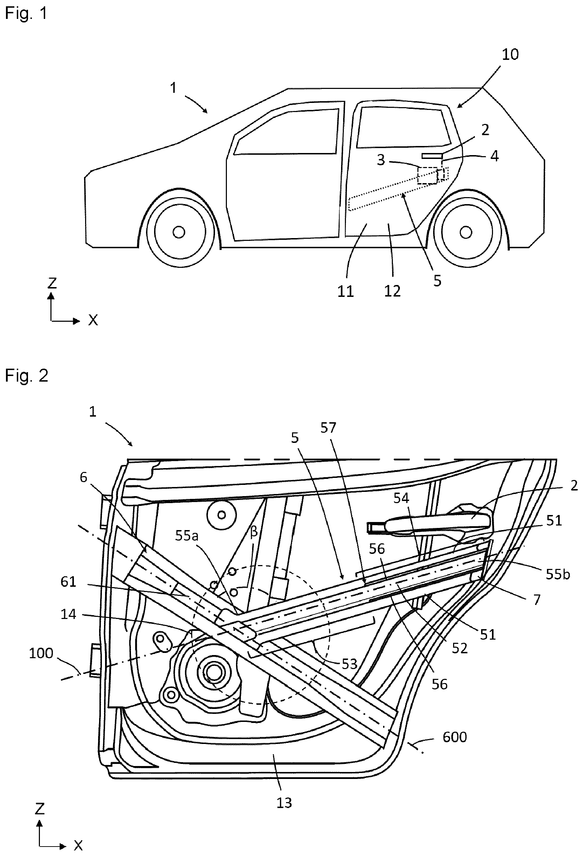

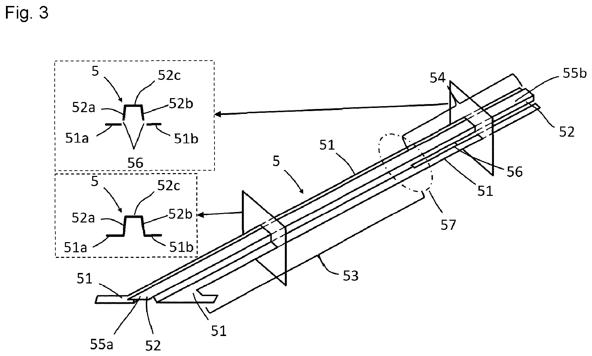

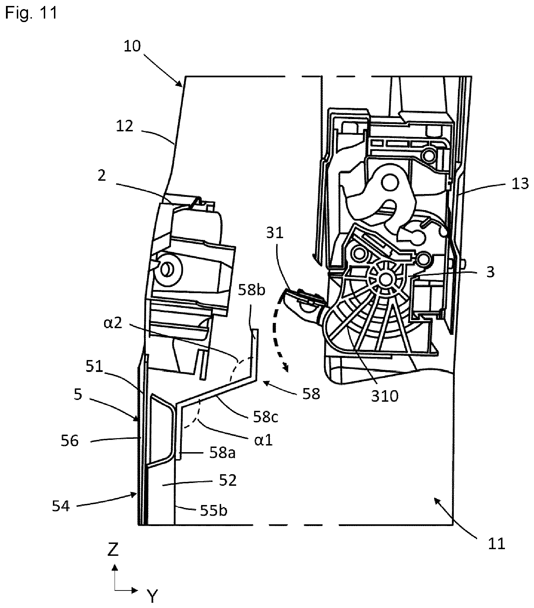

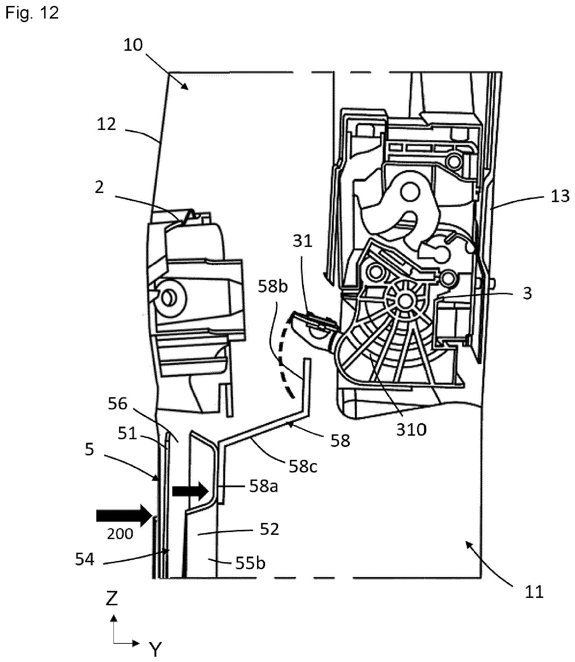

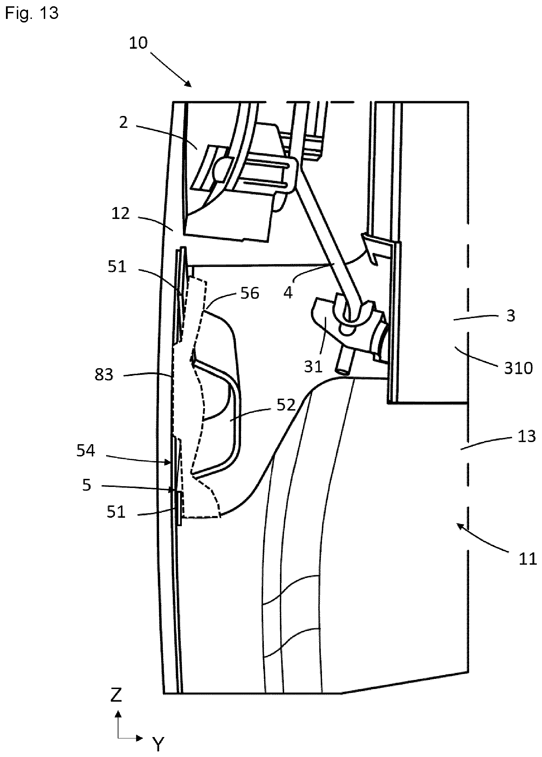

La figure 1 illustre schématiquement un mode de réalisation d'un véhicule 1, en particulier un véhicule 1 automobile. Le véhicule 1 peut être de tout type, notamment un véhicule particulier ou utilitaire. Le véhicule 1 comprend au moins un ouvrant 10, de préférence du type latéral. Notamment, l'ouvrant 10 est une porte latérale arrière. A des fins de clarté, l'ouvrant 10 décrit en référence aux figures 2 à 13 est la porte latérale arrière gauche du véhicule 1, il est néanmoins entendu qu'une telle représentation n'est en rien limitative et que l'invention s'applique *mutatis mutandis à* une porte latérale avant, à des portes situées à droite du véhicule 1 ou encore à des portes battantes ou coulissantes arrières d'un véhicule 1, notamment de type utilitaire.

Par convention dans la description ci-après, la direction selon laquelle le véhicule 1 automobile se déplace en ligne droite est définie comme étant la direction longitudinale X, orientée de l'avant vers l'arrière. La direction perpendiculaire à la direction longitudinale et située dans un plan parallèle au sol est nommée direction transversale Y. La direction perpendiculaire aux directions X et Y est nommée direction verticale Z. Ainsi, on définit un repère direct XYZ représenté dans les figures le nécessitant.

Egalement, on entend, par « intérieur », le côté le plus proche de l'intérieur de l'habitacle du véhicule 1. De la même manière, on entend, par « extérieur », le côté opposé à l'intérieur de l'habitacle, c'est-à-dire le plus proche d'un environnement extérieur au véhicule 1 le long de la direction transversale Y. Enfin, les termes « premier » et « deuxième » ont vocation à distinguer des composants similaires et non à établir une hiérarchie au sein de l'invention.

L'ouvrant 10 comprend un caisson 11 comportant au moins un panneau extérieur 12 et un panneau intérieur 13. Par exemple, de tels panneaux peuvent être réalisés en tôle d'alliage d'aluminium ou en tôle d'acier.

L'ouvrant 10 comprend une commande d'ouverture extérieure 2. De manière préférentielle, la commande d'ouverture extérieure 2 est au moins partiellement fixée sur le panneau extérieur 12. La commande d'ouverture extérieure 2 comprend, selon des exemples non limitatifs, un moyen d'actionnement tel qu'une poignée ou un bouton poussoir mécanique.

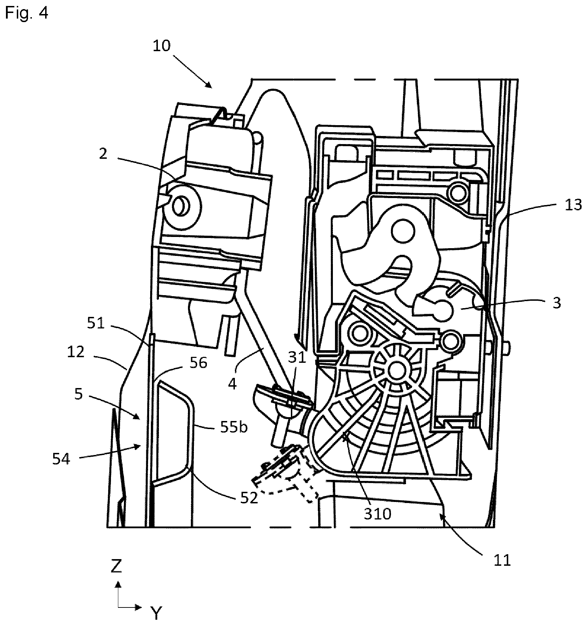

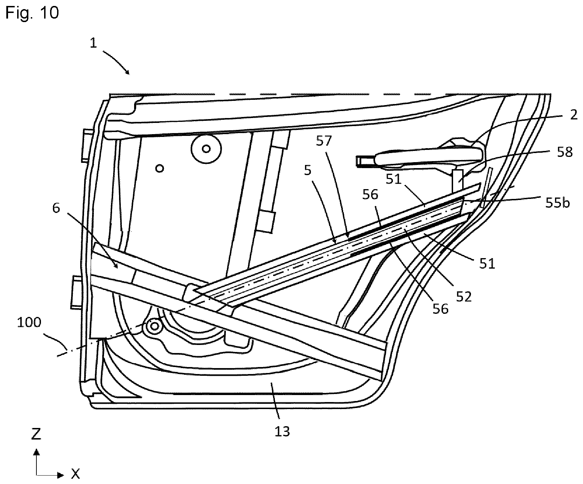

Egalement, l'ouvrant 10 comprend une serrure 3. Notamment, la serrure 3 est au moins partiellement fixée au panneau intérieur 13 de l'ouvrant 10 et comprend un levier 31 mobile. Le levier 31 est configuré pour être déplacé, sous l'effet d'une demande d'ouverture de l'ouvrant 10 par actionnement de la commande d'ouverture extérieure 2, entre une position de repos, illustrée en lignes pleines aux figures 4 et 10, et une position de libération, illustrée en ligne pointillées. On entend ici par « demande d'ouverture », une action ou un effort exercé(e) par un utilisateur pour actionner la commande d'ouverture extérieure 2. L'ouvrant 10 comprend de préférence un dispositif de transmission 4 de la demande d'ouverture entre la commande d'ouverture extérieure 2 et le levier 31 de la serrure 3 tel qu'une ou plusieurs tringles ou câbles. Dans la position de repos, le levier 31 est sans effet sur la serrure 3 de sorte que, si l'ouvrant 10 est en position fermée, l'ouvrant 10 reste dans un état bloqué fermé. Dans la position de libération, le levier 31 libère la serrure 3 de sorte que, si l'ouvrant 10 est en position fermée, le levier 31 libère la serrure 3 de sorte à permettre l'ouverture de l'ouvrant 10. Particulièrement, le levier 31 d'ouverture extérieur est monté pivotant autour d'un axe de rotation 310 s'étendant, par exemple, longitudinalement ou sensiblement longitudinalement lorsque l'ouvrant 10 est fermé. De préférence, lorsque le levier 31 est déplacé, une extrémité libre du levier 31 est déplacée au sein du caisson 11.

Dans l'exemple illustré qui représente une transmission de mouvement par l'intermédiaire d'un dispositif de transmission 4 du type tringle, l'extrémité libre du levier 31 pivote dans le sens anti-horaire et descend pour passer de la position de repos à la position de libération. A l'inverse, pour passer de la position de libération à la position de repos, le levier 31 pivote dans le sens horaire, de sorte à remonter vers sa position initiale de repos. Selon une variante de réalisation, non représentée, la transmission de mouvement est assurée par des câbles et le levier 31 pivote selon des sens inverses à ceux précités.

L'ouvrant 10 comprend, en outre, un moyen de blocage 5 s'étendant le long d'une première direction 100. Le moyen de blocage 5 est configuré de sorte à bloquer le déplacement du levier 31 avant que celui-ci n'atteigne la position de libération en cas de choc déformant le panneau extérieur 12. En d'autres termes le moyen de blocage 5 est configuré pour s'étendre transversalement, c'est-à-dire en travers, à la trajectoire du levier 31 entre sa position de repos et sa position de libération, tel que davantage exposé ci-après. Notamment, un choc considéré est un choc latéral réalisé le long d'une deuxième direction 200, transversale, voire orthogonale à la première direction 100. Notamment la deuxième direction 200 est parallèle à la direction transversale Y.

En effet, lors d'un choc déformant le panneau extérieur 12, il est essentiel d'assurer, d'une part, que le blocage du levier 31 est bien mis en œuvre, mais également qu'il est mis en œuvre rapidement, c'est-à-dire, préférentiellement au niveau de la position de repos ou d'une position intermédiaire distante de la position de libération, par exemple plus proche de la position de repos que de la position de libération. En outre, il est essentiel de ne pas entraver le fonctionnement du levier 31 en conditions normales, c'est-à-dire lorsqu'il n'y a pas de déformation du panneau extérieur 12 et/ou du moyen de blocage 5.

Le moyen de blocage 5 est une pièce allongée rapportée et montée dans l'ouvrant 10. On entend par « allongée » que sa longueur est strictement supérieure à sa largeur, voire au moins supérieure au double de sa largeur. On entend ici par « longueur » la dimension mesurée le long de la première direction 100 et par largeur une dimension définie le long d'une direction orthogonale à la première direction 100 et à la deuxième direction 200.

De préférence, le moyen de blocage 5 est réalisé dans un matériau métallique, par exemple en tôle pliée, notamment en tôle d'acier ou d'alliage d'aluminium. Alternativement, le moyen de blocage 5 est au moins partiellement réalisé dans un matériau plastique.

Le moyen de blocage 5 comprend une embase 51 et un corps 52 au moins en partie relié à l'embase 51. L'embase 51 et le corps 52 s'étendent sur l'essentiel de la longueur du moyen de blocage 5, c'est-à-dire sur au moins 50% de ladite longueur, voire 70%. Particulièrement, l'embase 51 et/ou le corps 52 s'étend(ent) sur l'ensemble de la longueur du moyen de blocage 5. Selon un exemple de réalisation, le corps 52 et l'embase 51 du moyen de blocage forment un ensemble monobloc, c'est-à-dire qu'ils ne peuvent être dissociés sans résulter en la dégradation, voire la destruction du moyen de blocage 5.

L'embase 51 est plane ou sensiblement plane et s'étend au niveau, ou à proximité du panneau extérieur 12. Le corps 52 comprend une pluralité de parois et s'étend en saillie de l'embase 51, vers le panneau intérieur 13. Le corps 52 est disposé de sorte que l'embase 51 est interposée entre le corps 52 et le panneau extérieur 12 le long de la deuxième direction 200.

Selon un exemple de réalisation préférentiel, illustré aux figures 2 à 13, le corps 52 du moyen de blocage 5 comprend un profil en « U », ou sensiblement en « U ». Le corps 52 comprend ainsi une première paroi 52a et une deuxième paroi 52b du moyen de blocage 5 formant des bras du « U » et une paroi intermédiaire 52c formant une base du « U », reliant la première paroi 52a et la deuxième paroi 52b. Selon des variantes de réalisation non représentées, le moyen de blocage 5 peut avoir un profil sensiblement en « L », « V », « W », « O » ou « H ».

La première paroi 52a et la deuxième paroi 52b du corps 52 sont tous deux reliés à l'embase 51. L'ensemble du corps 52 présentant une forme en « U » et de l'embase 51 peut ainsi s'inscrire dans un profil en « Ω », c'est-à-dire en oméga, ou sensiblement en oméga. La première paroi 52a et la deuxième paroi 52b s'étendent d'un même côté de l'embase 51 le long de la deuxième direction 200 lorsque le moyen de blocage 5 est positionné dans l'ouvrant 10. Le corps 52 présente ainsi une forme creuse, en profilé, dont un sommet formé par la paroi intermédiaire 52c présente une plus grande proximité avec le panneau intérieur 13 que l'embase 51. La première paroi 52a et la deuxième paroi 52b s'étendent transversalement relativement à l'embase 51 et relativement à la paroi intermédiaire 52c. De manière préférentielle, afin de limiter l'encombrement généré au niveau de la paroi intermédiaire 52c, la première paroi 52a et la deuxième paroi 52b sont inclinés relativement à l'embase 51 et relativement à la paroi intermédiaire 52c.

Particulièrement, l'embase 51 comprend une première base 51a et une deuxième base 51b, respectivement reliées à la première paroi 52a et au deuxième paroi 52b, la première base 51a et la deuxième base 51b étant planes ou sensiblement planes. Notamment, selon un exemple de réalisation, la première base 51a et la deuxième base 51b s'inscrivent au moins en partie dans un même plan.

Également, le moyen de blocage 5 comprend une première portion 53 et une deuxième portion 54, correspondant à des parties distinctes du moyen de blocage 5 le long de la première direction 100 reliées entre elles. La première portion 53 comprend une première extrémité 55a du moyen de blocage 5 tandis que la deuxième portion 54 comprend une deuxième extrémité 55b, opposée à la première extrémité 55a le long de la première direction 100. La deuxième portion 54 présente une plus grande proximité que la première portion 53 relativement à la serrure 3 et au levier 31.

La première portion 53 et la deuxième portion 54 comprennent chacune une partie de l'embase 51 et du corps 52 tels que décrits plus haut. Les parties de l'embase 51 et du corps 52 sont notamment plus rigides dans la première portion 53 que dans la deuxième portion 54.

Particulièrement, selon l'invention, la deuxième portion 54 comprend au moins une découpe 56 interposée entre l'embase 51 et au moins une partie du corps 52. Par exemple, tel qu'illustré, le moyen de blocage 5 comprend une pluralité de découpes 56. La description ci-après est faite en référence à un moyen de blocage 5 comprenant une pluralité de découpes 56, il est entendu qu'elle s'applique *mutatis mutandis* à un moyen de blocage comprenant au moins une découpe 56. Notamment, les découpes 56 sont réalisées au niveau d'une zone de liaison reliant le corps 52 à l'embase 51. En l'espèce des découpes 56 sont réalisées entre la première paroi 52a et la première base 51a d'une part, et entre la deuxième paroi 52b et la deuxième base 51b d'autre part. Il en résulte qu'au moins une partie du corps 52 compris dans la deuxième portion 54 est flottant relativement à une partie de l'embase 51 de la deuxième portion 54. On entend par « flottant » que, pour une profil d'une partie de la deuxième portion 54 du moyen de blocage 5, défini dans un plan orthogonal à la première direction 100, au moins une partie du corps 52 n'est pas directement relié à l'embase 51 et s'étend à distance non nulle de l'embase 51 au sein dudit plan. A l'inverse, la première portion 53 du moyen de blocage 5 est dépourvue de telles découpes 56, les zones de liaison entre le corps 52 et l'embase 51 comprises dans la première portion 53 étant ainsi pleines.

De manière préférentielle, les découpes 56 sont disposées de sorte que, au sein d'un profil d'un plan considéré, l'embase 51 et le corps 52 sont séparés, l'embase 51 comprenant une ou plusieurs lamelles planes.

Les découpes 56 s'étendent depuis la deuxième extrémité 55b jusqu'à une zone du moyen de blocage 5 qualifiée de zone de pliure 57. La « zone de pliure » correspond à une zone de transition entre la première portion 53 et au moins une partie de la deuxième portion 54 comprenant les découpes 56, lesdites portions présentant des rigidités différentes et étant aptes à réagir différemment en cas de choc déformant le panneau extérieur 13. En effet, la présence de découpes 56, tel que davantage décrit ci-après, confère une différence de flexibilité et de mobilité entre le corps 52 et l'embase 51 au sein de la deuxième portion 54. L'embase 51, notamment du fait de sa forme plane, présente une plus grande flexibilité que le corps 52 et peut être déformée en cas de choc déformant le panneau extérieur 12. Le corps 52, du fait de sa forme allongée creuse, notamment en « U », est plus rigide.

De la sorte, le moyen de blocage 5 prévient des situations dans lesquelles, du fait du choc déformant le panneau extérieur 12, le moyen de blocage 5 est déformé d'un bloc avec le panneau extérieur 12 et entraîné à distance du levier 31, tel que cela peut être observé dans l'art antérieur avec des moyens de blocage présentant des structures rectilignes simples. De manière générale, davantage détaillée ci-après, le moyen de blocage 5 selon l'invention permet d'assurer que le corps 52 est apte à s'étendre dans la trajectoire du levier 31 comprise entre la position de repos et la position de libération du levier 31, avant que celui-ci n'atteigne la position de libération, en cas de choc déformant le panneau extérieur 12 réalisé le long de la deuxième direction 200 et ce même si l'embase 51 subit une déformation déplaçant celle-ci dans la direction opposée au levier 31. Le corps 52, notamment la partie du corps 52 comprise dans la deuxième portion 54, comprend ainsi au moins une surface de butée apte à venir au contact du levier 31 en cas de choc le long de la deuxième direction 200.

De manière préférentielle, les découpes 56 sont droites et s'étendent parallèlement à la première direction 100 et/ou parallèlement à au moins une partie de l'embase 51. Un tel principe permet d'assurer l'homogénéité de rigidité, le long de la première direction 100, de la partie du corps 52 flottante s'étendant en regard des découpes 56. Il en va de même pour une homogénéité de rigidité de l'embase 51, notamment une homogénéité de rigidité au sein de la partie de la première base 51a s'étendant en regard de l'une des découpes 56 ou de la deuxième base 51b.

Par exemple, lesdites découpes 56 s'étendant sur au moins 30%, voire 50%, de la longueur du moyen de blocage 5 définie le long de la première direction 100. Une longueur trop importante des découpes 56, par exemple supérieure à 75% de la longueur du moyen de blocage 5, est susceptible de résulter en des problèmes de vibrations et/ de trop grande flexibilité du corps 52. Inversement, une longueur des découpes 56 inférieure à 10% de la longueur du moyen de blocage 5, voire à 20%, est susceptible de limiter, voire empêcher, la capacité de déformation de l'embase 51.

Selon un exemple de réalisation, le moyen de blocage 5 s'étend au moins en partie en vis à vis du levier 31 le long de la deuxième direction 200. Notamment, une partie du corps 52 de la deuxième portion 54 du moyen de blocage 5 s'étend en regard du levier 31 le long de la deuxième direction 200. Autrement dit, au moins un axe parallèle à la deuxième direction 200 passe par le levier 31 et le moyen de blocage 5. Par exemple, le corps 52 s'étend en regard de l'axe de rotation 310 du levier 31. Ainsi, en l'absence de déformation le moyen de blocage 5 s'étend à distance non nulle du levier 31 de sorte à ne pas interférer avec sa trajectoire. Notamment, le corps 52 est placé au plus près du levier 31 le long de la direction transversale Y, l'écart entre le corps 52 et le levier 31 étant, par exemple, compris entre 1mm et 9mm, préférentiellement entre 1mm et 4mm, le long de la direction transversale Y. En cas de choc le long de la deuxième direction 200 déformant le panneau extérieur 12, le moyen de blocage 5 est ainsi déplacé de sorte qu'au moins le corps 52 s'étend dans la trajectoire du levier 31, bloquant alors le déplacement de ce dernier.

Alternativement, le corps 52 du moyen de blocage 5 comprend une patte d'extension 58 disposée au niveau de la deuxième portion 54 et de la deuxième extrémité 55b. Un tel moyen de blocage 5 est, par exemple, mis en œuvre lorsque la zone entourant la serrure 3 présente un fort encombrement et qu'il n'est pas possible de disposer le moyen de blocage 5 en regard du levier 31 de serrure 3 le long de la deuxième direction 200. La patte d'extension 58 est reliée à au moins l'une des parois du corps 52, par exemple à la paroi intermédiaire 52c. Elle peut être rapportée et fixée à ladite paroi, par exemple soudée ou rivetée, ou, de manière alternative, l'au moins une paroi et la patte d'extension 58 sont venus de matière. La patte d'extension 58 s'étend au moins en partie transversalement à la première direction 100, tel que représenté en lignes pointillées à la figure 10. Selon une variante de réalisation non représentée, le corps 52 comprend la patte d'extension 58 obtenue par découpe et emboutissage, par exemple de sorte que le corps 52 et la patte d'extension 58 forment un ensemble monobloc.

Par exemple, la patte d'extension 58 s'étend parallèlement, ou sensiblement parallèlement, à la direction verticale Z. De manière préférentielle, la patte d'extension 58 a un profil étagé comprenant un premier segment 58a, relié à au moins I'lune des parois du corps 52 du moyen de blocage 5, un deuxième segment 58b, libre et disposé dans un plan distinct du premier segment 58a, et un segment intermédiaire 58c, incliné relativement au premier segment 58a et au deuxième segment 58b et les reliant entre eux. On entend ici par « segment » une portion d'un tout. Le segment intermédiaire 58c est incliné vers le levier 31 de sorte que le deuxième segment 58b présente une plus grande proximité relativement au levier 31 que le premier segment 58a. Optionnellement, le segment intermédiaire 58c présente une première inclinaison α1, supérieure à 90°, relativement au premier segment 58a et/ou une deuxième inclinaison α2, supérieure à 90°, relativement au deuxième segment 58b. Dans un tel exemple, au moins le deuxième segment 58b comprend la zone de butée et est apte à s'étendre en travers de la trajectoire du levier 31 de sorte à interrompre son déplacement avant qu'il n'atteigne sa position de libération.

Ainsi l'embase 51 et la pluralité de parois du corps 52 du moyen de blocage 5 ne sont pas directement disposées en regard du levier 31 mais peuvent être disposées plus bas que celui-ci au sein de l'ouvrant 10 pour s'adapter à un environnement encombré et à une large variété d'architectures d'ouvrant 10. La patte d'extension 58 est solidaire de la pluralité de parois du corps 52 et est déplacée concomitamment au reste du moyen de blocage 5 en cas d'impact le long de la deuxième direction 200 déformant le panneau extérieur 12 de sorte à assurer le blocage du levier 31 tel que décrit plus haut.

Le moyen de blocage 5 peut être monté selon différentes variantes d'exécution au sein de l'ouvrant 10. Particulièrement, différentes variantes de fixation de la première extrémité 55a et de la deuxième extrémité 55b du moyen de blocage 5 peuvent être mises en œuvre et combinées entre elles. Le moyen de blocage 5 est en partie monté fixe, ou sensiblement fixe, par rapport au panneau extérieur 12 lorsque l'ouvrant 10 est en condition normale, c'est-à-dire lorsque l'ouvrant 10 n'est pas déformé par un choc. Le moyen de blocage 5 est disposé de sorte que le corps 52 et l'embase 51 s'étendent à distance non nulle du levier 31, hors de la trajectoire de déplacement de ce dernier.

De manière générale, le moyen de blocage 5 est au moins en partie disposé, directement et/ou indirectement, sur le panneau extérieur 12 et est conformé de manière à s'étendre vers le panneau intérieur 13.

Selon un premier exemple de réalisation de la fixation de la première extrémité 55a, illustré à la figure 2, l'ouvrant 10 comprend, en outre, un renfort anti-intrusion 6 fixé sur le panneau extérieur 12. Le renfort anti intrusion présente une forme allongée, par exemple une forme de traverse, et s'étend le long d'une direction d'extension 600 transversale à la première direction 100. Notamment, le renfort anti-intrusion 6 passe par une zone centrale 14 de l'ouvrant 10. On entend par « zone centrale 14 » une zone de l'ouvrant 10 centrée sur un milieu de l'ouvrant 10, ledit milieu étant défini le long d'au moins une direction, notamment la première direction 100 ou la direction longitudinale X. Par exemple, le renfort anti-intrusion 6 s'étend diagonalement dans l'ouvrant 10, de l'avant vers l'arrière du véhicule 1.

Le moyen de blocage 5 est disposé transversalement au renfort anti-intrusion 6, par exemple de sorte à former un angle β compris entre 90 et 145° relativement au renfort anti-intrusion 6. Le moyen de blocage 5 passe par la zone centrale 14 de l'ouvrant 10. La première extrémité 55a du moyen de blocage 5 est fixée sur le renfort anti-intrusion 6. Selon des exemples de réalisation, la première extrémité 55a du moyen de blocage 5 est soudée, rivetée, vissée et/ou collée sur le renfort anti-intrusion 6. Le moyen de blocage 5 est alors indirectement relié au panneau extérieur 12 par l'intermédiaire du renfort anti-intrusion 6 au niveau de la première extrémité 55a. De manière préférentielle, la première extrémité 55a du moyen de blocage 5 est fixée au moins par l'intermédiaire d'une partie de l'embase 51 de la première portion 53. Selon un exemple de réalisation optionnel, l'embase 51 de la première portion 53 est prolongée au-delà du corps 52 de sorte à coopérer avec le renfort anti-intrusion 6. Optionnellement encore, le renfort anti-intrusion 6 comprend une arête de renfort 61, notamment centrale, apte à former butée du moyen de blocage 5 le long d'un sens de la première direction 100.

Selon un deuxième exemple de réalisation de la fixation de la première extrémité 55a, illustré en lignes pointillées à la figure 2, la première extrémité 55a du moyen de blocage 5 est fixée sur une première partie intermédiaire du caisson 11 comprise entre le panneau intérieur 13 et le panneau extérieur 12, par exemple sur une épaisseur ou un serti du caisson 11. Similairement à ce qui a été exposé plus haut, le moyen de blocage 5 est alors disposé de sorte à passer par la zone centrale 14 de l'ouvrant et s'étend d'avant en arrière. Une telle alternative peut être, par exemple, mise en œuvre lorsque l'ouvrant 10 est dépourvu de renfort anti-intrusion 6.

Alternativement encore, la première extrémité 55a est directement fixée sur le panneau extérieur 12. Similairement à ce qui a été exposé plus haut, la première extrémité 55a peut être soudée, rivetée, vissée et/ou collée.

Selon un premier exemple de réalisation de la fixation de la deuxième extrémité 55b, illustré à la figure 2, 6 ou 7, l'ouvrant 10 comprend, en outre, un renfort de serrure 7. Notamment, le renfort de serrure 7 est au moins fixé sur le panneau intérieur 13. Alternativement ou additionnellement, le renfort de serrure 7 est au moins fixé sur une deuxième partie intermédiaire du caisson 11 comprise entre le panneau intérieur 13 et le panneau extérieur 12, par exemple sur une épaisseur ou un serti du caisson 11.

Le renfort de serrure 7 est une pièce permettant de renforcer la raideur et/ou la tenue de la serrure 3, notamment relativement au panneau intérieur 13. Par exemple, tel qu'illustré, le renfort de serrure 7 est disposé au niveau d'une partie arrière du caisson 11, aux abords de la serrure 3. Notamment, le renfort de serrure 7 est une pièce métallique, par exemple en tôle, notamment de même nature que celle utilisée à la fabrication du caisson 11.

Par exemple, le renfort de serrure 7 comprend une forme en « L » comportant un premier côté 71 et un deuxième côté 72 s'étendant transversalement l'un à l'autre, notamment orthogonalement l'un à l'autre. En l'espèce, dans le renfort de serrure 7 illustré, le premier côté 71 est fixé sur le panneau intérieur 13 et le deuxième côté 72 s'étend transversalement au premier côté 71, en direction du panneau extérieur 12 et du moyen de blocage 5. La deuxième extrémité 55b du moyen de blocage 5 est au moins en partie fixée sur le renfort de serrure 7. Notamment, seule l'embase 51 est fixée au renfort de serrure 7. Le renfort de serrure 7 est dimensionné et conformé de sorte à ne pas empêcher le déplacement du corps 52 du moyen de blocage 5 vers le levier 31, notamment un déplacement le long de la deuxième direction 200, en cas de choc déformant le panneau extérieur 12.

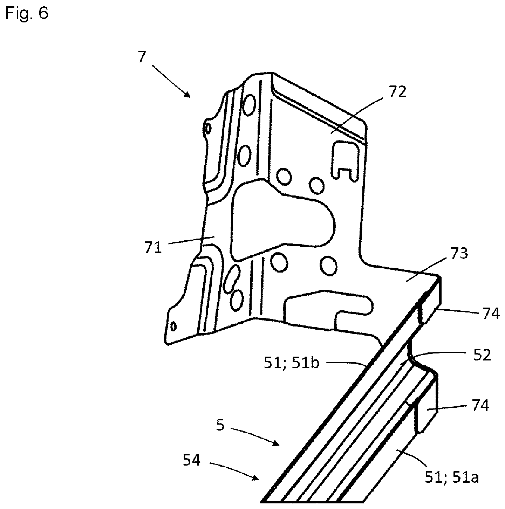

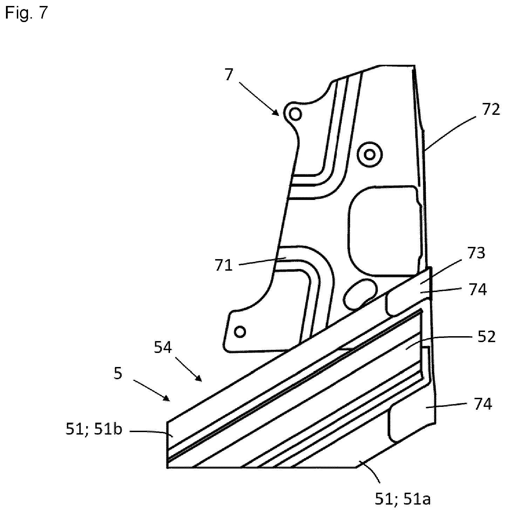

Selon un exemple de réalisation optionnel mais préférentiel, illustré à la figure 6 ou 7, le renfort de serrure 7 comprend un appendice de fixation 73 du moyen de fixation. L'appendice de fixation 73 est porté par la structure en « L », ici par le deuxième côté 72, et comprend au moins une patte de liaison 74 configurée pour coopérer avec l'embase 51. L'au moins une patte de liaison 74 est également configurée pour former butée du moyen de blocage 5 le long d'au moins un sens de la deuxième direction 200. Par exemple, tel qu'illustré, l'au moins une patte de liaison 74 est disposée de sorte à être interposée entre l'embase 51 et le panneau extérieur 12 le long de la deuxième direction 200. En l'espèce, l'appendice de fixation 73 comprend deux pattes de liaison 74, chaque patte de liaison 74 étant configurée pour coopérer avec l'une des bases de l'embase 51. La forme du renfort de serrure 7, notamment de l'appendice de fixation 73, est adaptée pour permettre le déplacement du corps 52 le long de la deuxième direction 200, vers le levier 31. Également, la forme du renfort de serrure 7 et/ou le positon du moyen de blocage 5 assurent, le long de la première direction 100, la présence d'un jeu entre tout ou partie du renfort de serrure 7 et au moins le corps 52, particulièrement la deuxième extrémité 55b du moyen de blocage 5.

Selon un deuxième exemple de réalisation de la fixation de la deuxième extrémité 55b, non représenté, la deuxième extrémité 55b du moyen de blocage 5 est fixée sur la deuxième partie intermédiaire du caisson 11 comprise entre le panneau intérieur 13 et le panneau extérieur 12 et opposée à la première partie intermédiaire, par exemple sur l'épaisseur ou le serti du caisson 11. Similairement à ce qui a été exposé plus haut, la deuxième extrémité 55b peut être soudée, rivetée ou collée.

Le moyen de blocage 5 est ainsi agencé de sorte à être au moins fixé au niveau de la première extrémité 55a et de la deuxième extrémité 55b, notamment au moins par l'intermédiaire d'une partie de l'embase 51 du moyen de blocage 5 compris au niveau desdites extrémités. Il est entendu que les différentes alternatives de fixation de la première extrémité 55a et de la deuxième extrémité 55b peuvent être combinées les unes avec les autres sans contrainte particulière. En fonction des alternatives mises en œuvre, le moyen de blocage 5 peut ainsi s'étendre sur tout ou partie d'une dimension de l'ouvrant 10 définie le long de la première direction 100.

Afin d'optimiser encore le fonctionnement du moyen de blocage 5 pour assurer son fonctionnement et sa déformation aussi bien en cas d'impact au niveau de l'avant, du centre ou de l'arrière de l'ouvrant 10, la position de la zone de pliure 57 est avantageusement, de manière optionnelle mais préférentielle, disposé au niveau de la zone centrale 14 de l'ouvrant 10. Tel qu'indiqué plus haut, on qualifie ici de « zone centrale 14 » la zone de l'ouvrant 10 centrée sur un milieu de l'ouvrant 10, ledit milieu étant défini le long d'au moins une direction, notamment la première direction 100 ou la direction longitudinale X. Particulièrement, la « zone centrale 14 » de l'ouvrant 10 s'étend sur une distance, relativement au milieu de l'ouvrant 10, de ±35%, voire ±25%, de la dimension de l'ouvrant 10 définie le long de la direction considérée. Autrement dit, tel qu'illustré à la figure 2, la zone centrale 14 est ici un cercle centré sur le milieu de la dimension de l'ouvrant 10 définie le long d'une direction considérée, ici la première direction 100, dont le rayon est égal à ±35%, voire ±25%, de ladite dimension.

Optionnellement, au moins une partie de l'embase 51 du moyen de blocage 5, comprise entre la première extrémité 55a et la deuxième extrémité 55b, est fixée au panneau extérieur 12. Par exemple, tel qu'illustré, l'ouvrant 10 comprend une colle ou un mastic 81 ayant des fonctions structurantes, c'est-à-dire des fonctions adhésives, permettant de fixer au moins une partie de l'embase 51, de la première portion 53 et/ou de la deuxième portion 54, au panneau extérieur 12.

Alternativement, le moyen de blocage 5 est fixé par l'intermédiaire de la première extrémité 55a et de la deuxième extrémité 55b, selon l'une des alternatives exposées plus haut pour chacune desdites extrémité, tandis que tout ou partie de l'embase 51 du moyen de blocage 5 compris entre la première extrémité 55a et la deuxième extrémité 55b est flottant relativement au panneau extérieur 12, c'est-à-dire disposé à distance non nulle du panneau extérieur 12. De préférence, dans une telle alternative, l'ouvrant 10 comprend un organe d'amortissement 82 configuré pour limiter un contact entre le moyen de blocage 5 et le panneau extérieur 12 et/ou pour limiter des vibrations du moyen de blocage 5. L'organe d'amortissement 82 est alors disposé entre l'embase 51 et le panneau extérieur 12 sur tout ou partie de la longueur du moyen de blocage 5. Par exemple, l'organe d'amortissement 82 est un mastic de calage ou encore une mousse à cellules fermées, qui permet notamment d'éviter la rétention d'eau.

Optionnellement encore, l'ouvrant 10 peut comprendre au moins une mousse amortissante 83, apte à réduire la génération de vibration au niveau de la partie du corps 52, comprise dans la deuxième portion 54 du moyen de blocage 5, flottante relativement à l'embase 51. La mousse amortissante 83 est au moins disposée dans l'au moins une découpe 56, sur tout ou partie de la longueur de celle-ci. Il en va de même lorsque le moyen de blocage 5 comprend une pluralité de découpes 56. Également, la mousse amortissante 83 s'étend en partie dans le creux délimité par la forme du corps 52. Optionnellement, la mousse amortissante 83 peut s'étendre entre la première base 51a et la deuxième base 51b de l'embase 51, notamment de sorte à venir au contact du panneau extérieur 12. Un tel arrangement prévient avantageusement la génération de bruit dû aux vibrations du moyen de blocage 5 relativement au panneau extérieur 12, notamment lorsque la vitesse longitudinale du véhicule 1 vient à augmenter, ou résultant de la vibration du corps 52 flottant relativement à l'embase 51.

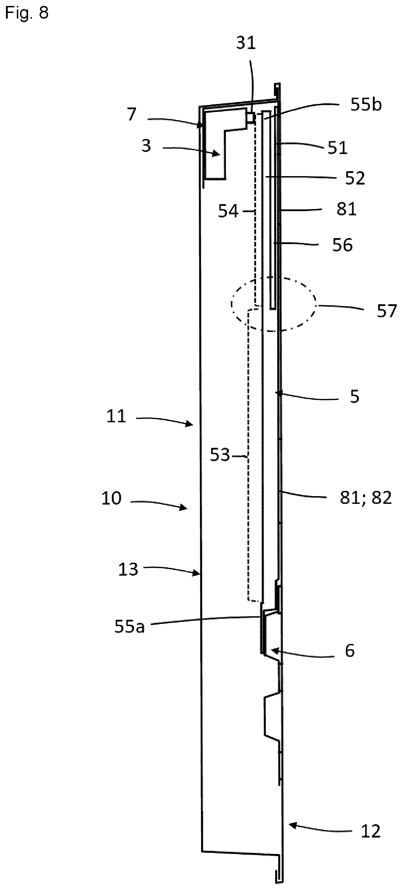

Ainsi, en fonctionnement normal du véhicule 1, tel qu'illustré sur les figures 4 et 8, le levier 31 est déplacé librement entre la position de repos et la position de libération, ici en pivotant autour de l'axe de rotation 310. Le levier 31 est déplacé par l'intermédiaire du dispositif de transmission 4 suite à une demande sur la commande d'ouverture extérieure 2. Le moyen de blocage 5 n'entrave alors pas le déplacement du levier 31 et s'étend à distance non nulle d'une extrémité libre du levier 31.

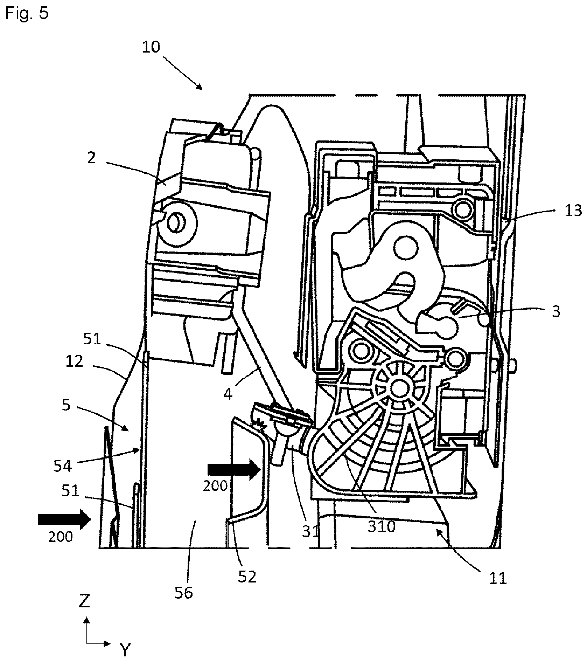

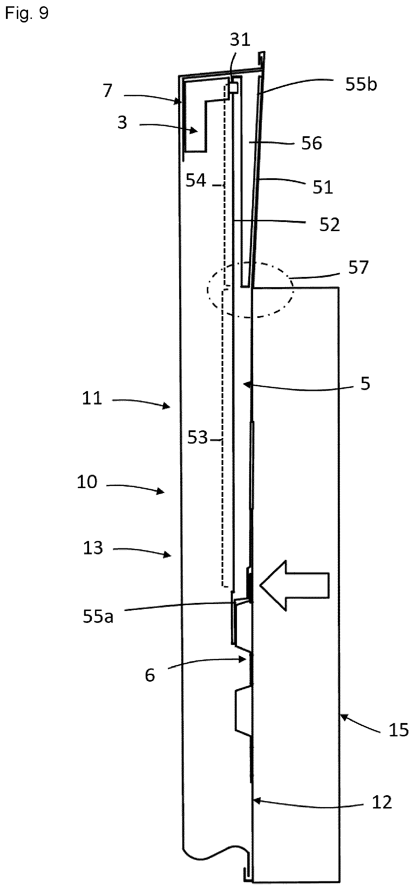

Lors d'un choc exercé contre le panneau extérieur 12 le long de la deuxième direction 200, depuis l'extérieur vers l'intérieur du véhicule 1, de l'ouvrant 10, représenté par des flèches à la figure 5 ou 9, le panneau extérieur 12 se déforme en se pliant. Il en résulte qu'au moins une partie du panneau extérieur 12 se rapproche du panneau intérieur 13. Le moyen de blocage 5, directement et/ou indirectement monté sur le panneau extérieur 12 selon les alternatives décrites plus haut, se déplace également le long de la deuxième direction 200.

Pour un élément impacteur 15 frappant la partie avant et/ou centrale de l'ouvrant 10, tel qu'illustré à la figure 9, au moins une partie de l'embase 51 du moyen de blocage 5 suit la déformation du panneau extérieur 12. La première portion 53, directement et/ou indirectement montée sur le panneau extérieur 12 au moins au niveau de la première extrémité 55a, est déplacé concomitamment au panneau extérieur 12, selon une même amplitude, vers le panneau intérieur 13.

L'embase 51 du moyen de blocage 5 selon l'invention se déforme au niveau de la zone de pliure 57 et la partie de l'embase 51 comprise dans la deuxième portion 54 est entraînée par la déformation du panneau extérieur 12 de sorte qu'elle est en partie inclinée relativement à la partie de l'embase 51 comprise dans la première portion 53. La partie du corps 52 comprise dans la deuxième portion 54 étant flottante relativement à l'embase 51, ladite partie du corps 52 reste alignée, ou sensiblement alignée, avec la partie du corps 52 comprise dans la première portion 53. Le corps 52 reste, par exemple, parallèle ou sensiblement parallèle à la direction longitudinale X sur l'ensemble de sa longueur. La partie du corps 52 comprise dans la deuxième portion 54 est alors déplacée le long de la deuxième direction 200 similairement à la première portion 53 du moyen de blocage 5 du fait du déplacement du panneau extérieur 12. Le corps 52 est alors disposé en travers de la trajectoire du levier 31 et forme butée de celui-ci avant qu'il ne puisse atteindre la position de libération. Le levier 31 est alors bloqué dans la position de repos ou dans une position intermédiaire comprise entre la position de repos et la position de libération, notamment au voisinage de la position de repos. Le moyen de blocage 5 interrompt rapidement le déplacement du levier 31. L'ouverture intempestive de la serrure 3, et par conséquent de l'ouvrant 10, est empêchée et ce malgré les différents facteurs ou phénomènes parasites engendrés par le choc.

La zone de butée avec le levier 31 peut être comprise dans différentes parties du corps 52 selon le mode de réalisation mis en œuvre. Par exemple, la zone de butée est comprise dans la première paroi 52a, la deuxième paroi 52b et/ou la paroi intermédiaire 52c lorsque le corps 52 présente une structure en « U » et en fonction du type de dispositif de transmission 4 utilisé. Alternativement, la zone de butée est comprise dans la patte d'extension 58 tel qu'exposé plus haut.

Lorsque l'élément impacteur 15 frappe la partie arrière de l'ouvrant 10, comprenant ici la serrure 3, l'embase 51 et le corps 52 de la deuxième portion 54 sont tous deux déplacés le long de la deuxième direction 200 de façon similaire à la déformation du panneau extérieur 12. Ils sont ainsi déplacés vers le levier 31, ce qui permet un blocage classique du levier 31 en positionnant le corps 52 en travers de la trajectoire du levier 31.

La présente invention propose ainsi un ouvrant comprenant un moyen de blocage monté directement et/ou indirectement sur un panneau extérieur de l'ouvrant qui est adapté à des situations diverses de choc et permet d'assurer la protection des occupants par le maintien de l'ouvrant en configuration fermée indépendamment de la zone de l'ouvrant impactée par le choc. Le moyen de blocage peut avantageusement être appliqué à une large variété d'ouvrant. Bien que la solution soit particulièrement adaptée pour un choc latéral sur une porte latérale battante ou coulissante, notamment sur une porte latérale arrière, la solution peut s'étendre à une porte battante de coffre de véhicule utilitaire.

La présente invention ne saurait toutefois se limiter aux moyens et configurations décrits et illustrés ici et elle s'étend également à tout moyen ou configuration équivalents et à toute combinaison techniquement opérante de tels moyens dans la mesure où ils remplissent *in fine* les fonctionnalités décrites et illustrées dans le présent document tant qu'ils entrent dans le cadre de l'invention défini par les revendications annexées.

## Revendications

1. Ouvrant (10) pour véhicule (1) automobile comprenant un panneau extérieur (12) et un panneau intérieur (13), formant un caisson (11), une commande d'ouverture extérieure (2), une serrure (3) fixée au panneau intérieur (13) et comprenant un levier (31) configuré pour être déplacé entre une position de repos bloquant la serrure (3) et une position de libération libérant la serrure (3) de sorte à permettre l'ouverture de l'ouvrant (10), l'ouvrant (10) comprenant, en outre, un moyen de blocage (5) du déplacement du levier (31), allongé, s'étendant le long d'une première direction (100) et comprenant :
- une embase (51) au moins en partie plane et un corps (52) en partie relié à l'embase (51) et s'étendant vers le panneau intérieur (13) ;
- une première portion (53) et une deuxième portion (54) comprenant respectivement une première extrémité (55a) et une deuxième extrémité (55b) du moyen de blocage (5) opposées le long de la première direction (100), la deuxième portion (54) étant disposée à proximité de la serrure (3) et comprenant au moins une découpe (56) interposée entre l'embase (51) et au moins une partie du corps (52) et s'étendant de la deuxième extrémité (55b) à une zone de pliure (57) du moyen de blocage (5) de sorte qu'au moins une partie du corps (52) comprise dans la deuxième portion (54) est flottante relativement à une partie de l'embase (51) de la deuxième portion (54) et est apte à s'étendre dans une trajectoire du levier (31) comprise entre la position de repos et la position de libération avant que celui-ci n'atteigne la position de libération en cas de choc déformant le panneau extérieur (12) réalisé le long d'au moins une deuxième direction (200) transversale à la première direction (100).

2. Ouvrant (10) selon la revendication précédente, dans lequel le corps (52) du moyen de blocage (5) comprend un profil en « U », ou sensiblement en « U », une première paroi (52a) et une deuxième paroi (52b) du moyen de blocage (5) formant des bras du « U », reliés à l'embase (51), et une paroi intermédiaire (52c) formant une base du « U », reliant la première paroi (52a) et la deuxième paroi (52b).

3. Ouvrant (10) selon l'une des revendications précédentes, dans lequel :
- l'ouvrant (10) comprend, en outre, un renfort de serrure (7), fixé sur le panneau intérieur (13), la deuxième extrémité (55b) du moyen de blocage (5) étant fixée sur le renfort de serrure (7) ; ou
- la deuxième extrémité (55b) du moyen de blocage (5) est fixée sur une partie intermédiaire du caisson (11) comprise entre le panneau intérieur (13) et le panneau extérieur (12).

4. Ouvrant (10) selon l'une des revendications précédentes, dans lequel :
- l'ouvrant (10) comprend, en outre, un renfort anti-intrusion (6), fixé sur le panneau extérieur (12) et s'étendant le long d'une direction d'extension (600) transversale à la première direction (100), la première extrémité (55a) du moyen de blocage (5) étant fixée sur le renfort anti-intrusion (6) ; ou
- la première extrémité (55a) du moyen de blocage (5) est fixée sur une partie intermédiaire du caisson (11) comprise entre le panneau intérieur (13) et le panneau extérieur (12).

5. Ouvrant (10) selon l'une des revendications précédentes, comprenant une zone centrale (14) centrée sur un milieu de l'ouvrant (10), défini le long d'au moins une direction, notamment la première direction (100), et s'étendant sur une distance, relativement au milieu de l'ouvrant (10), de ±25% de la longueur de l'ouvrant (10) définie le long de ladite direction, la zone de pliure (57) du moyen de réglage s'étendant en regard de la zone centrale (14).

6. Ouvrant (10) selon l'une des revendications précédentes, dans lequel :
- le moyen de blocage (5) s'étend au moins en partie en vis à vis du levier (31) le long de la deuxième direction (200); ou
- le moyen de blocage (5) comprend une patte d'extension (58), s'étendant au moins en partie en vis à vis du levier (31) le long de la deuxième direction (200).

7. Ouvrant (10) l'une des revendications précédentes, dans lequel les découpes (56) sont droites et s'étendent parallèlement à la première direction (100) et/ou parallèlement à au moins une partie de l'embase (51), lesdites découpes (56) s'étendant sur au moins 30%, voire 50%, d'une longueur du moyen de blocage (5) définie le long de la première direction (100).

8. Ouvrant (10) selon l'une des revendications précédentes, comprenant, en outre :
- du mastic (81) disposé entre au moins une partie de l'embase (51) et le panneau extérieur (12) ; et/ou
- de la mousse amortissante (83), disposée au niveau d'au moins l'une des découpes (56).

9. Moyen de blocage (5) pour un ouvrant selon l'une des revendications précédentes présentant une forme allongée s'étendant le long d'une première direction (100) et comprenant :
- une embase (51) au moins en partie plane et un corps (52) en partie relié à l'embase (51) et s'étendant en saillie de l'embase (51) ;
- une première portion (53) et une deuxième portion (54) comprenant respectivement une première extrémité (55a) et une deuxième extrémité (55b) du moyen de blocage (5) opposées le long de la première direction (100), la deuxième portion (54) comprenant au moins une découpe (56) interposée entre l'embase (51) et au moins une partie du corps (52) et s'étendant de la deuxième extrémité (55b) à une zone de pliure (57) du moyen de blocage (5) de sorte qu'au moins une partie du corps (52) compris dans la deuxième portion (54) est flottante relativement à une partie de l'embase (51) de la deuxième portion (54).

10. Véhicule (1), notamment véhicule (1) automobile, **caractérisé en ce qu'**il comprend un ouvrant (10) selon l'une des revendications 1 à 8 et/ou un moyen de blocage (5) selon la revendication 9.

## Patentansprüche

1. Tür (10) für ein Kraftfahrzeug (1), umfassend ein Außenblech (12) und ein Innenblech (13), die einen Kasten (11) bilden, ein äußeres Öffnungsbedienelement (2), ein Schloss (3), das an dem Innenblech (13) befestigt ist und einen Hebel (31) umfasst, der dazu ausgebildet ist, zwischen einer das Schloss (3) blockierenden Ruheposition und einer das Schloss (3) freigebenden Freigabeposition, so dass das Öffnen der Tür (10) ermöglicht wird, verlagert zu werden, wobei die Tür (10) ferner ein langgestrecktes Blockiermittel (5) zum Blockieren der Verlagerung des Hebels (31) umfasst, das sich entlang einer ersten Richtung (100) erstreckt und Folgendes umfasst:
- einen Fuß (51), der mindestens teilweise eben ist, und einen Körper (52), der teilweise mit dem Fuß (51) verbunden ist und sich zu dem Innenblech (13) hin erstreckt;
- einen ersten Abschnitt (53) und einen zweiten Abschnitt (54), die ein erstes Ende (55a) bzw. ein zweites Ende (55b) des Blockiermittels (5) umfassen, die entlang der ersten Richtung (100) entgegengesetzt sind, wobei der zweite Abschnitt (54) in der Nähe des Schlosses (3) angeordnet ist und mindestens einen Ausschnitt (56) umfasst, der zwischen dem Fuß (51) und mindestens einem Teil des Körpers (52) liegt, und sich von dem zweiten Ende (55b) zu einem Knickbereich (57) des Blockiermittels (5) erstreckt, so dass mindestens ein Teil des Körpers (52), der in dem zweiten Abschnitt (54) enthalten ist, relativ zu einem Teil des Fußes (51) des zweiten Abschnitts (54) schwebt und in der Lage ist, sich in einer Trajektorie des Hebels (31) zu erstrecken, die zwischen der Ruheposition und der Freigabeposition enthalten ist, bevor dieser im Fall eines das Außenblech (12) verformenden Aufpralls, der entlang mindestens einer zweiten Richtung (200) quer zu der ersten Richtung (100) erfolgt, die Freigabeposition erreicht.

2. Tür (10) nach dem vorhergehenden Anspruch, wobei der Körper (52) des Blockiermittels (5) ein "U"-förmiges oder im Wesentlichen "U"-förmiges Profil umfasst, wobei eine erste Wand (52a) und eine zweite Wand (52b) des Blockiermittels (5) Schenkel des "U" bilden, die mit dem Fuß (51) verbunden sind, und wobei eine Zwischenwand (52c) die Basis des "U" bildet, die die erste Wand (52a) und die zweite Wand (52b) verbindet.

3. Tür (10) nach einem der vorhergehenden Ansprüche, wobei:
- die Tür (10) ferner eine Schlossverstärkung (7) umfasst, die an dem Innenblech (13) befestigt ist, wobei das zweite Ende (55b) des Blockiermittels (5) an der Schlossverstärkung (7) befestigt ist; oder
- das zweite Ende (55b) des Blockiermittels (5) an einem Zwischenteil des Kastens (11), der zwischen dem Innenblech (13) und dem Außenblech (12) enthalten ist, befestigt ist.

4. Tür (10) nach einem der vorhergehenden Ansprüche, wobei:
- die Tür (10) ferner eine Anti-Eindring-Verstärkung (6) umfasst, die an dem Außenblech (12) befestigt ist und sich entlang einer Erstreckungsrichtung (600) quer zu der ersten Richtung (100) erstreckt, wobei das erste Ende (55a) des Blockiermittels (5) an der Anti-Eindring-Verstärkung (6) befestigt ist; oder
- das erste Ende (55a) des Blockiermittels (5) an einem Zwischenteil des Kastens (11), der zwischen dem Innenblech (13) und dem Außenblech (12) enthalten ist, befestigt ist.

5. Tür (10) nach einem der vorhergehenden Ansprüche, umfassend einen zentralen Bereich (14), der auf eine Mitte der Tür (10) zentriert ist, die entlang mindestens einer Richtung, insbesondere der ersten Richtung (100), definiert ist, und sich über eine Distanz relativ zu der Mitte der Tür (10) von ±25 % der entlang dieser Richtung definierten Länge der Tür (10) erstreckt, wobei sich der Knickbereich (57) des Verstellmittels gegenüber dem zentralen Bereich (14) erstreckt

6. Tür (10) nach einem der vorhergehenden Ansprüche, wobei:
- das Blockiermittel (5) sich mindestens teilweise gegenüber dem Hebel (31) entlang der zweiten Richtung (200) erstreckt; oder
- das Blockiermittel (5) eine Erweiterungslasche (58) umfasst, die sich mindestens teilweise gegenüber dem Hebel (31) entlang der zweiten Richtung (200) erstreckt.

7. Tür (10) nach einem der vorhergehenden Ansprüche, wobei die Ausschnitte (56) gerade sind und sich parallel zu der ersten Richtung (100) und/oder parallel zu mindestens einem Teil des Fußes (51) erstrecken, wobei sich die Ausschnitte (56) über mindestens 30 % oder sogar 50 % einer entlang der ersten Richtung (100) definierten Länge des Blockiermittels (5) erstrecken.

8. Tür (10) nach einem der vorhergehenden Ansprüche, umfassend ferner:
- Dichtmasse (81), die zwischen mindestens einem Teil des Fußes (51) und dem Außenblech (12) angeordnet ist; und/oder
- dämpfenden Schaumstoff (83), der mindestens an einem der Ausschnitte (56) angeordnet ist.

9. Blockiermittel (5) für eine Tür nach einem der vorhergehenden Ansprüche, das eine langgestreckte Form aufweist, sich entlang einer ersten Richtung (100) erstreckt und Folgendes umfasst:
- einen Fuß (51), der mindestens teilweise eben ist, und einen Körper (52), der teilweise mit dem Fuß (51) verbunden ist und sich von dem Fuß (51) abstehend erstreckt;
- einen ersten Abschnitt (53) und einen zweiten Abschnitt (54), die ein erstes Ende (55a) bzw. ein zweites Ende (55b) des Blockiermittels (5) umfassen, die entlang der ersten Richtung (100) entgegengesetzt sind, wobei der zweite Abschnitt (54) mindestens einen Ausschnitt (56) umfasst, der zwischen dem Fuß (51) und mindestens einem Teil des Körpers (52) liegt und sich von dem zweiten Ende (55b) zu einem Knickbereich (57) des Blockiermittels (5) erstreckt, so dass mindestens ein Teil des Körpers (52), der in dem zweiten Abschnitt (54) enthalten ist, relativ zu einem Teil des Fußes (51) des zweiten Abschnitts (54) schwebt.

10. Fahrzeug (1), insbesondere Kraftfahrzeug (1), **dadurch gekennzeichnet, dass** es eine Tür (10) nach einem der Ansprüche 1 bis 8 und/oder ein Blockiermittel (5) nach Anspruch 9 umfasst.

## Claims

1. Opening leaf (10) for a motor vehicle (1), comprising an outer panel (12) and an inner panel (13), forming a box section (11), an outer opening control (2), a lock (3) fixed to the inner panel (13) and comprising a lever (31) configured to be moved between a rest position blocking the lock (3) and a release position releasing the lock (3) so as to allow the opening of the opening leaf (10), wherein the opening leaf (10) also comprises a means (5) for blocking the movement of the lever (31), which is elongate, extending in a first direction (100) and comprising:
- a baseplate (51) that is at least partly planar and a body (52) that is partly connected to the baseplate (51) and extends towards the inner panel (13);
- a first portion (53) and a second portion (54) respectively comprising a first end (55a) and a second end (55b) of the blocking means (5) that are opposite one another in the first direction (100), the second portion (54) being disposed near the lock (3) and comprising at least one cutout (56) interposed between the baseplate (51) and at least one part of the body (52) and extending from the second end (55b) to a fold zone (57) of the blocking means (5) such that at least a part of the body (52) lying in the second portion (54) is floating relative to a part of the baseplate (51) of the second portion (54) and is able to extend in a trajectory of the lever (31) between the rest position and the release position, before this reaches the release position, in the case of impact deforming the outer panel (12) occurring in at least a second direction (200) transverse to the first direction (100).

2. Opening leaf (10) according to the preceding claim, wherein the body (52) of the blocking means (5) comprises a U-shaped or substantially U-shaped profile, a first wall (52a) and a second wall (52b) of the blocking means (5) forming the arms of the U, which are connected to the baseplate (51), and an intermediate wall (52c) forming a base of the "U", connecting the first wall (52a) and the second wall (52b).

3. Opening leaf (10) according to either of the preceding claims, wherein:
- the opening leaf (10) also comprises a lock reinforcement (7), fixed to the inner panel (13), the second end (55b) of the blocking means (5) being fixed to the lock reinforcement (7); or
- the second end (55b) of the blocking means (5) is fixed to an intermediate part of the box section (11) that is between the inner panel (13) and the outer panel (12).

4. Opening leaf (10) according to one of the preceding claims, wherein:
- the opening leaf (10) also comprises an anti-intrusion reinforcement (6), fixed to the outer panel (12) and extending in a direction of extension (600) transverse to the first direction (100), the first end (55a) of the blocking means (5) being fixed to the anti-intrusion reinforcement (6); or
- the first end (55a) of the blocking means (5) is fixed to an intermediate part of the box section (11) that is between the inner panel (13) and the outer panel (12).

5. Opening leaf (10) according to one of the preceding claims, comprising a central zone (14) centred on a middle of the opening leaf (10), defined in at least one direction, in particular the first direction (100), and extending over a distance, relative to the middle of the opening leaf (10), of ±25% of the length of the opening leaf (10) defined in said direction, the fold zone (57) of the adjustment means extending alongside the central zone (14).

6. Opening leaf (10) according to one of the preceding claims, wherein:
- the blocking means (5) extends at least partly opposite the lever (31) in the second direction (200); or
- the blocking means (5) comprises an extension tab (58), extending at least partly opposite the lever (31) in the second direction (200).

7. Opening leaf (10) according to one of the preceding claims, wherein the cutouts (56) are straight and extend parallel to the first direction (100) and/or parallel to at least one part of the baseplate (51), said cutouts (56) extending over at least 30%, or even 50%, of a length of the blocking means (5) that is defined in the first direction (100).

8. Opening leaf (10) according to one of the preceding claims, also comprising:
- mastic (81) disposed between at least one part of the baseplate (51) and the outer panel (12); and/or
- damping foam (83), disposed at at least one of the cutouts (56).

9. Blocking means (5) for an opening leaf according to one of the preceding claims, having an elongate shape extending in a first direction (100) and comprising:
- a baseplate (51) that is at least partly planar and a body (52) that is partly connected to the baseplate (51) and protrudes from the baseplate (51);
- a first portion (53) and a second portion (54) respectively comprising a first end (55a) and a second end (55b) of the blocking means (5) that are opposite one another in the first direction (100), the second portion (54) comprising at least one cutout (56) interposed between the baseplate (51) and at least one part of the body (52) and extending from the second end (55b) to a fold zone (57) of the blocking means (5) such that at least a part of the body (52) lying in the second portion (54) is floating relative to a part of the baseplate (51) of the second portion (54).

10. Vehicle (1), in particular a motor vehicle (1), **characterized in that** it comprises an opening leaf (10) according to one of Claims 1 to 8 and/or a blocking means (5) according to Claim 9.
